# EUROPÄISCHE PATENTSCHRIFT

(11) **EP 1 505 288 B1**
(45) Veröffentlichungstag und Bekanntmachung des Hinweises auf die Patenterteilung: **20.12.2017**
(21) Anmeldenummer: 04014664.9
(22) Anmeldetag: 23.06.2004
(51) Int. Cl.: F02D 41/20, F02D 41/22, F02M 59/46, H01L 41/04

(54) **Verfahren und Vorrichtung zur Funktionsdiagnose eines Piezoaktors eines Kraftstoffzumesssystems einer Brennkraftmaschine**
Method and device for the functional diagnosis of a piezoactuator in the fuel metering system of a combustion engine
Méthode et dispositif pour surveiller le fonctionnement d'un actionneur piézoélectrique d'alimentation en carburant d'un moteur à combustion

(30) Priorität: 08.08.2003 DE 10336639
(43) Veröffentlichungstag der Anmeldung: 09.02.2005
(73) Patentinhaber: ROBERT BOSCH GMBH, 70442 Stuttgart (DE)
(72) Erfinder: Rueger, Johannes-Joerg, 1130 Wien (AT)

(56) Entgegenhaltungen:
- EP-A- 1 167 729
- EP-A- 1 450 028
- US-B1- 6 384 512
- PATENT ABSTRACTS OF JAPAN Bd. 018, Nr. 133 (M-1571), 4. März 1994 (1994-03-04) & JP 05 318780 A (PFU LTD), 3. Dezember 1993 (1993-12-03)
- PATENT ABSTRACTS OF JAPAN Bd. 2002, Nr. 09, 4. September 2002 (2002-09-04) & JP 2002 134804 A (NIPPON SOKEN INC; DENSO CORP), 10. Mai 2002 (2002-05-10)

## Beschreibung

### Stand der Technik

Die Erfindung betrifft ein Verfahren und eine Vorrichtung zur Funktionsdiagnose eines Piezoaktors eines Kraftstoffzumesssystems einer Brennkraftmaschine gemäß den Oberbegriffen der jeweiligen unabhängigen Ansprüche.

In heutigen Kraftfahrzeugen kommen zunehmend Kraftstoffzumesssysteme zum Einsatz, bei denen die Kraftstoffdruckerzeugung und die Kraftstoffzumessung mittels eines Hochdruckspeichers voneinander entkoppelt sind. Sehr verbreitet ist das bspw. in der DE 100 02 270 C1 beschriebene sogenannte "Common-Rail-(CR-)System", bei dem Kraftstoff mittels Einspritzventilen (Injektoren) in die jeweiligen Verbrennungsräume (Zylinder) der Brennkraftmaschine eingespritzt wird, wobei der genannte Hochdruckspeicher als "Rail" bezeichnet wird.

Die genannten Injektoren weisen meist Piezoaktoren auf, mittels derer die Bewegung einer Düsennadel des Injektors gesteuert wird (siehe JP405318780 und Es1450028). Die Ansteuerung der Düsennadel erfolgt entweder durch die Düsennadel selbst oder mittels eines die Bewegung der Düsennadel steuernden, zwischengeschalteten hydraulischen Kopplers, und zwar meist eines Schalt- bzw. Steuerventils. Dieses Steuerventil wird dabei durch elektrische Aufladung und dadurch verursachte Längendehnung des jeweiligen Piezoaktors positioniert, womit im Ergebnis der Hub der Düsennadel entsprechend gesteuert wird.

Die genannten Piezoaktoren werden im Einspritzbetrieb mittels einer Leistungselektronik auf eine bestimmte elektrische Spannung aufgeladen, wobei sich an einem dort angeordneten Piezoelement ein von der Ansteuerspannung nicht-linear abhängiger Hub ergibt. Für eine präzise Zumessung von Kraftstoff ist es unerlässlich, den Hub des Aktors bzw. den entsprechenden Hub der Düsennadel oder des Steuerventils und damit auch die durch die Ansteuerung hervorgerufene Längendehnung des Piezoaktors möglichst präzise zu kennen bzw. zu kontrollieren. Allerdings weisen die genannten Piezoaktoren bekanntermaßen ein "Alterungsverhalten" auf, d.h. der Aktorhub bei einem fabrikneuen Aktor erhöht sich bei an sich konstanter Ansteuerspannung innerhalb der ersten ca. 10 Mio. Ansteuerungen um bis zu 10%. Zudem ist die sich bei einer Ansteuerung ergebende Längendehnung der Piezoaktoren empfindlich von der Temperatur abhängig.

Zur Erfassung der genannten Längendehnung stehen als Messwerte nur elektrische Größen des jeweiligen Piezoaktors zur Verfügung, denn der Aktorhub selbst ist unter den hier vorliegenden Einsatzbedingungen nicht direkt messbar.

Nun bestehen die genannten Piezoaktoren meist aus einer Vielzahl von laminaren Schichten, welche in elektrischer Hinsicht parallel geschaltete Kondensatoren darstellen. Bei diesen einzelnen Schichten kann es zu Ablösungen einzelner Schichten (vorzugsweise außen liegender Schichten) kommen, womit dann ein elektrisches und/oder mechanisches Fehlverhalten des jeweiligen Aktors eintritt. Allerdings ist dieses Fehlverhalten allein durch Aufladen des Aktors auf eine bestimmte elektrische Spannung nicht feststellbar.

Es ist in diesem Zusammenhang darauf hinzuweisen, dass die genannten Injektoren im Betrieb der Brennkraftmaschine zur Ermöglichung eines geringen Kraftstoffverbrauchs unter gleichzeitiger Einhaltung strenger Abgasnormen sowie zur Begrenzung des Geräuschpegels bei der Verbrennung nur sehr geringe Toleranzen im Hinblick auf die Einspritzmenge aufzuweisen haben. Insbesondere auch bei sehr kleinen Einspritzmengen, wie sie z.B. bei sogenannten "Voreinspritzungen" vorkommen, muss eine gewünschte Einspritzmenge mit sehr hoher Genauigkeit realisierbar sein.

Zur Funktionsdiagnose von Injektoren eines hier betroffenen Kraftstoffzumesssystems ist lediglich bekannt, im Bereich der Motorelektrik (Kabelbaum, Injektorelektrik, etc.) oder im Motorsteuergerät etwa auftretende Fehler zu berücksichtigen. Nicht erfassbar und daher diagnostizierbar sind hingegen Funktionsfehler, die auf einen bevorstehenden Totalausfall oder ein Fehlverhalten eines Piezoaktors selbst hinweisen.

Aus den genannten Gründen ist es wünschenswert, eine möglichst präzise und insbesondere auch im laufenden Betrieb einer hier betroffenen Brennkraftmaschine bzw. eines die Brennkraftmaschine aufweisenden Kraftfahrzeuges durchführbare Funktionsdiagnose bereitzustellen. Weiterhin ist es wünschenswert, Abweichungen der Einspritzungen von einem vorgegebenen Sollverhalten schnell und zuverlässig diagnostizieren zu können.

### Vorteile der Erfindung

Der vorliegenden Erfindung liegt daher die Aufgabe zugrunde, ein Verfahren der eingangs genannten Art anzugeben, welche eine gegenüber dem Stand der Technik verbesserte Funktionsdiagnose eines vorgenannten Piezoaktors eines Kraftstoffzumesssystems einer Brennkraftmaschine ermöglichen.

Diese Aufgabe wird bei einem hier betroffenen Verfahren durch die Merkmale des Anspruchs 1 gelöst.

Der Erfindung liegt der Gedanke zugrunde, zur Funktionsdiagnose eines hier betroffenen Piezoaktors eine Spannungs/Ladungs-Plausibilisierung durchzuführen, wobei der Aktor auf eine bestimmte elektrische Spannung aufgeladen wird und die sich dabei ergebende Ladungsmenge mit einer bei dieser Spannung zu erwartenden Sollladungsmenge verglichen wird. Aus der Abweichung zwischen den genannten beiden Ladungsmengen wird dann auf die Funktionsfähigkeit des Aktors geschlossen.

Ein Vorteil des vorgeschlagenen Verfahrens liegt darin, dass eine erheblich verbesserte Präzision bei der Funktionsdiagnose von Injektoren insbesondere eines Piezo-Common-Rail-Einspritzsystems ermöglicht wird. Ein weiterer Vorteil besteht darin, dass aufgrund der genannten Vorgehensweise in einem Steuergerät der Brennkraftmaschine bereits zur Verfügung stehende Werte von Spannung und Ladung eines Aktors zur Diagnose des Aktors und/oder der Leistungsendstufe verwendet werden können, um damit die genannten Funktionsfehler zu erkennen, die ansonsten unerkannt blieben.

### Zeichnung

Die Erfindung wird nachfolgend, unter Bezugnahme auf die Zeichnung, anhand bevorzugter Ausführungsbeispiele eingehender beschrieben, aus denen weitere Merkmale und Vorteile der Erfindung hervorgehen.

Im Einzelnen zeigen
- Fig. 1: eine Prinzipdarstellung eines Teils eines zum Einsatz der vorliegenden Erfindung geeigneten Common-Rail-Einspritzsystems gemäß dem Stand der Technik;
- Fig. 2: eine schematische, ausschnittweise Darstellung eines Kraftstoffeinspritzventils für Brennkraftmaschinen im Längsschnitt gemäß dem Stand der Technik;
- Fig. 3: ein Blockschaltbild zur Illustration der erfindungsgemäßen Funktionsdiagnose bei einer ladungsgeregelten Ansteuerung eines in der Fig. 2 gezeigten Piezo-Injektors; und
- Fig. 4: ein Blockschaltbild zur Illustration der erfindungsgemäßen Funktionsdiagnose bei einer spannungsgeregelten Ansteuerung eines solchen Injektors.

### Beschreibung der Ausführungsbeispiele

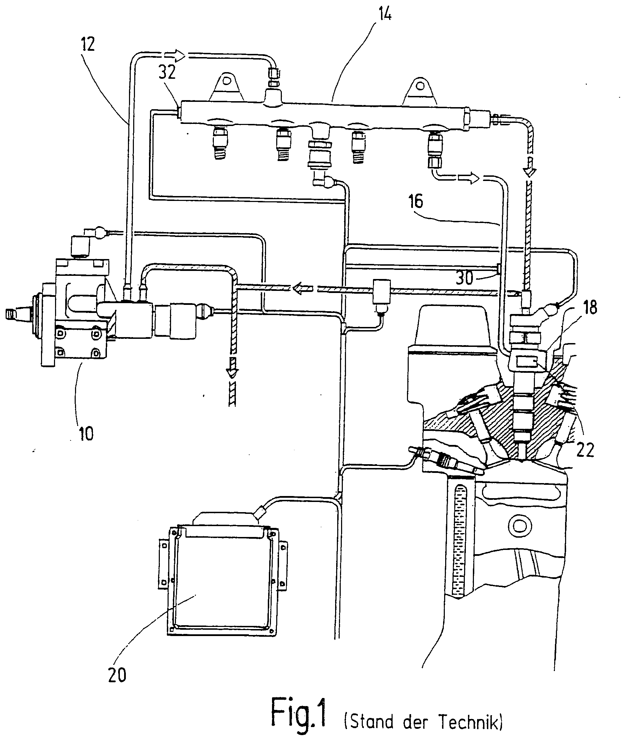

In der Fig. 1 ist der Hochdruckteil eines für sämtliche von der Erfindung umfassten Kraftstoffzumesssysteme stellvertretend stehenden Common-Rail-Einspritzsystems dargestellt, wobei nachfolgend nur dessen Hauptkomponenten und solche Komponenten näher erläutert werden, welche für das Verständnis der Erfindung wesentlich sind.

Die gezeigte Anordnung weist eine Hochdruckpumpe 10 auf, welche über eine Hochdruckleitung 12 mit einem Hochdruckspeicher ("Rail") 14 druckleitend in Verbindung steht. Der Hochdruckspeicher 14 ist über weitere Hochdruckleitungen mit Injektoren 18 verbunden. In der vorliegenden Darstellung sind zur Vereinfachung nur eine Hochdruckleitung 16 und ein Injektor 18 gezeigt. Der Injektor 18 ist in einer Brennkraftmaschine eines Kraftfahrzeuges angeordnet. Das dargestellte Einspritzsystem wird von einem Motorsteuergerät 20 gesteuert. Durch das Motorsteuergerät 20 erfolgt insbesondere eine Steuerung des gezeigten Injektors 18.

An dem Injektor 18 ist eine Einrichtung 22 zum Speichern von Informationen angeordnet, mittels derer eine individuelle Steuerung des Injektors 18 durch das Motorsteuergerät 20 ermöglicht wird. Es versteht sich, dass in dem vorliegenden Ausführungsbeispiel auch die anderen - hier nicht gezeigten - Injektoren eine entsprechende Einrichtung 22 aufweisen. Selbstverständlich kann auch vorgesehen sein, dass nur einer der Injektoren eine solche Speichereinrichtung 22 aufweist, die dann ebenfalls von den übrigen Injektoren genutzt wird. Bei den genannten Informationen handelt es sich vorzugsweise um Korrekturwerte für ein bevorzugt im Motorsteuergerät angeordnetes Mengenkennfeld des Injektors 18. Die Speichereinrichtung 22 kann bspw. als digitaler Datenspeicher ggf. mit einer alphanumerischen Verschlüsselung der Informationen oder dgl., als einer oder mehrere elektrische Widerstände, als Barcode, oder auch als eine integrierte Halbleiterschaltung realisiert sein. Das Motorsteuergerät 20 kann ebenfalls eine zusätzliche integrierte Halbleiterschaltung zur Auswertung der in der Einrichtung 22 gespeicherten Informationen aufweisen.

Die zur Realisierung einer bestimmten Einspritzmenge erforderliche Ansteuerdauer ist eine Funktion des Raildrucks. Dabei ist die Einspritzmenge als Funktion von Ansteuerdauer und Raildruck in sogenannten Mengenkennfeldern abgelegt, die in bestimmten Prüfpunkten mit einem Nennverhalten abgeglichen werden. Um eine Kraftstoffmengenzumessung im gesamten Betriebsbereich der Brennkraftmaschine und des Injektors zu ermöglichen, werden die entsprechenden Abgleichwerte zwischen den durch die Prüfpunkte definierten Stützstellen interpoliert.

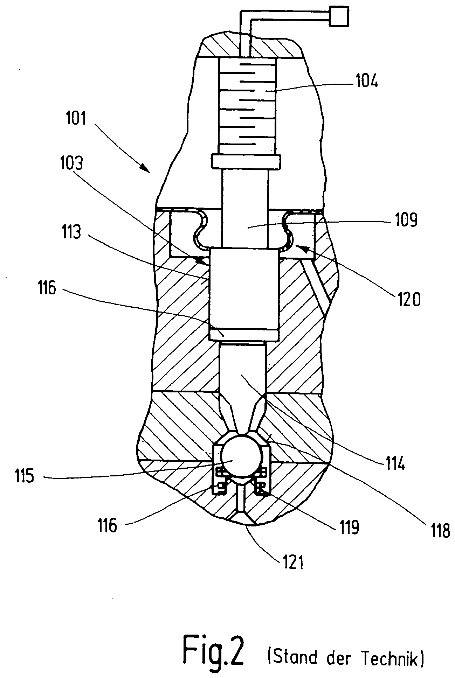

In der Fig. 2 ist ein aus der DE 100 02 270 C1 hervorgehendes piezoelektrisch gesteuertes Einspritzventil (Injektor) 101 in größerem Detail in einer Schnittzeichnung dargestellt. Das Einspritzventil 101 weist eine piezoelektrische Einheit (Piezoaktor) 104 zur Betätigung eines in einer Bohrung 113 eines Ventilkörpers 107 axial verschiebbaren Ventilglieds 103 auf. Das Einspritzventil 101 weist ferner einen an die piezoelektrische Einheit 104 angrenzenden Stellkolben 109 sowie einen an ein Ventilschließglied 115 angrenzenden Betätigungskolben 114 auf. Zwischen den Kolben 109, 114 ist eine als hydraulische Übersetzung arbeitende Hydraulikkammer 116 angeordnet. Das Ventilschließglied 115 wirkt mit wenigstens einem Ventilsitz 118, 119 zusammen und trennt einen Niederdruckbereich 120 von einem Hochdruckbereich 121. Eine nur schematisch angedeutete elektrische Steuereinheit 112 liefert die Ansteuerspannung für die piezoelektrische Einheit 104, und zwar in Abhängigkeit vom jeweils herrschenden Druckniveaus im Hochdruckbereich 121.

Wie nachfolgend noch im Detail beschrieben, existieren grds. zwei unabhängige Kenngrößen, welche das Verhalten des in der Fig. 2 gezeigten Piezoaktors charakterisieren, nämlich die in den Aktor eingebrachte Ladung sowie die an dem Aktor anliegende elektrische Spannung.

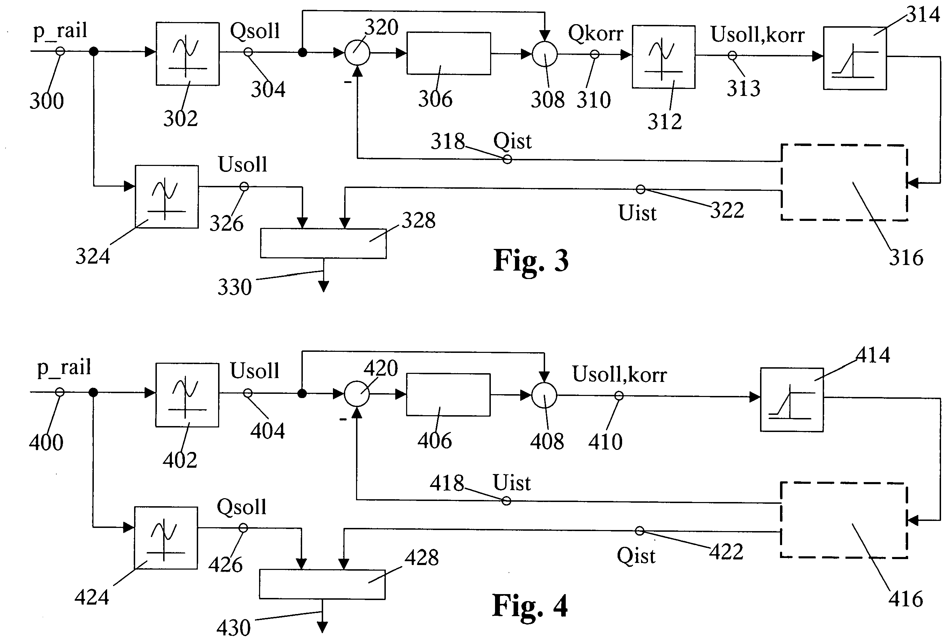

Das in der Fig. 3 gezeigte Blockschaltbild illustriert eine erfindungsgemäße, spannungsbasierte Funktionsdiagnose eines hier betroffenen Piezoaktors im Falle einer Ladungsregelung. Der bspw. von einem Motorsteuergerät bereitgestellte aktuelle Raildruck p_Rail 300 wird zunächst mittels eines ersten Kennfeldes 302 in eine Sollladung Q_soll 304 umgerechnet. Diese Sollladung 304 dient als Eingangsgröße eines PI(Proportional-Integral)-Reglers 306. Die Sollladung 304 liegt ferner an einem hinter dem PI-Regler 306 angeordneten ersten Verknüpfungspunkt 308 an. An diesem ersten Verknüpfungspunkt 308 werden die Sollladung 304 und das Ausgangssignal des PI-Reglers 306 aufaddiert. Die sich dabei ergebende korrigierte Sollladung Q_soll_korr 310 wird mittels eines zweiten Kennfeldes 312 in eine korrigierte Sollspannung U_soll_korr 313 umgewandelt und mittels eines ein Begrenzungsglied darstellenden dritten Kennfeldes 314 in einen entsprechenden Spannungswert umgewandelt, mittels dessen ein Aktor des hier nur schematisch dargestellten Einspritzsystems 316 angesteuert wird. Als Reaktion auf diese Ansteuerung ergibt sich ein Ladungs-Istwert Q_ist 318, welcher einem vor dem PI-Regler 306 angeordneten zweiten Verknüpfungspunkt 320 mit negativem Vorzeichen zugeführt wird. Das hinter dem zweiten Verknüpfungspunkt 320 damit vorliegende Differenzsignal (Q_sol -Q_ist) wird dann mittels des PI-Reglers 306 auf Null ausgeregelt.

Zusätzlich zum Ist-Wert Q_ist 318 liefert das Einspritzsystem 316 einen Ist-Wert 322 der Ansteuerspannung U_ist. Der am Eingang der gezeigten Anordnung anliegende Raildruck p_Rail 300 wird zusätzlich mittels eines vierten Kennfeldes 324 in einen entsprechenden Sollwert der Ansteuerspannung U_soll 326 umgerechnet. Die beiden Werte U_ist 322 und U_soll 326 werden zu Zwecken der Fehlerdiagnose schließlich mittels eines Auswerteglieds 328 ausgewertet, wobei die Differenz zwischen diesen beiden Werten gebildet wird. Ein Fehlerfall wird in dem vorliegenden Ausführungsbeispiel dann angenommen, wenn die Differenz (U_ist - U_soll) größer als ein empirisch vorab zu ermittelnder Schwellenwert ist. In einem solchen Fall gibt das Auswerteglied 328 dann eine Fehlermeldung 330 an das hier nicht gezeigte Motorsteuergerät aus.

Der PI-Regler 306 sorgt in dem vorliegenden Ausführungsbeispiel demnach dafür, dass die Regelabweichung der Ladung zu Null wird. Vergleicht man nun gleichzeitig den Spannungssollwert 326 mit der aktuell gemessenen Spannung 322, so kann aus der Differenz dieser beiden Werte auf das aktuelle Verhalten des Piezoaktors geschlossen werden. Denn ist der Messwert bspw. höher als der Sollwert, so bedeutet das, dass mit der definierten Ladungsmenge der Aktor auf eine höhere Spannung als erwartet aufgeladen wurde. Das wiederum deutet darauf hin, dass sich die Kapazität des Aktors gemäß der Beziehung Q = C * U verringert hat. Ursache kann in diesem Fall bspw. das Ablösen einzelner Schichten einer in dem jeweiligen Aktor angeordneten Multilayerkeramik sein.

Das vorbeschriebene Diagnosekonzept kann auch in Form eines in dem Motorsteuergerät abgelegten Steuerprogrammes realisiert sein. Dieses Steuerprogramm berechnet dann in Abhängigkeit von der gewünschten Einspritzmenge in an sich bekannter Weise anhand einer Kennlinie ,Ansteuerspannung über Einspritzmenge, eine Sollspannung für einen aktuell anzusteuernden Aktor. Die errechnete Wert der Sollspannung wird an einen Ansteuer-IC (Integrated Circuit) übermittelt und dort beim Ladevorgang des Aktors als Abschaltkriterium für den Ladevorgang zugrunde gelegt. Bei dem Ladevorgang wird der dem Aktor zugeführte elektrische Strom in geeigneter Form geregelt, wobei aufgrund der elektrischen Eigenschaften der Piezoaktoren meist ein Hystereseband vorliegt. Gleichzeitig wird die auf den Aktor aufgebrachte Spannung zu einem bestimmten Zeitpunkt nach Beendigung des eigentlichen Ladevorganges, jedoch vor dem Beginn des nachfolgenden Entladens des Aktors gemessen und steht dem genannten Steuerprogramm somit als Information zur Verfügung. Diese Information wird nun dazu genutzt, um eine Regelung zu realisieren, bei der die Sollspannung für den Ansteuer-IC in Abhängigkeit von der Abweichung der gemessenen Aktorspannung und der eigentlichen Sollspannung verändert wird.

Wie aus der Fig. 4 zu ersehen, kann alternativ zu der in der Fig. 3 gezeigten Ausführungsform der Spannungssollwert unter Berücksichtigung der auf den Aktor aufgebrachten Spannung gebildet werden. In diesem Fall wird der aktuell gemessene Spannungswert mit einem Spannungssollwert verglichen und die sich ergebende Abweichung wiederum als Regelgröße einem Regler zugeführt. Die Reglerausgangsgröße und der Spannungssollwert werden addiert und der sich dabei ergebende Wert wiederum mittels einer geeigneten Kennlinie in eine entsprechende Sollspannung umgewandelt. Anhand der dabei erfolgenden Regelung der Spannung kann, ebenso wie anhand der Fig. 3 beschrieben, aus der gemessenen Ladung im Vergleich zu einer Solladung auf das Aktorverhalten geschlossen werden.

Die in der Fig. 4 gezeigte Anordnung zeigt demnach eine ladungsbasierte Diagnose im Falle einer Spannungsregelung, wobei wiederum der gemessene Raildruck p_Rail 400 mittels eines ersten Kennfeldes 402 in eine Sollspannung U_soll 404 umgerechnet wird und diese Sollspannung 404 wiederum als Eingangsgröße eines PI(Proportional-Integral)-Reglers 406 dient. Die Sollspannung 404 liegt auch hier ferner an einem hinter dem PI-Regler 406 angeordneten ersten Verknüpfungspunkt 408 an. An diesem ersten Verknüpfungspunkt 408 werden die Sollspannung 404 und das Ausgangssignal des PI-Reglers 406 aufaddiert. Die sich dabei ergebende korrigierte Sollspannung U_soll_korr 410 wird mittels eines auch hier ein Begrenzungsglied darstellenden zweiten Kennfeldes 414 wiederum in einen Spannungswert umgewandelt, mittels dessen ein Aktor des auch hier nur schematisch dargestellten Einspritzsystems 416 angesteuert wird. Als Reaktion auf diese Ansteuerung ergibt sich wiederum sowohl ein Ist-Wert 418 der Spannung U_ist, welcher einem vor dem PI-Regler 406 angeordneten zweiten Verknüpfungspunkt 420 mit negativem Vorzeichen zugeführt wird, als auch ein Istwert der Ladung Q_ist 422. Das hinter dem zweiten Verknüpfungspunkt 420 vorliegende Differenzsignal (U_soll-U_ist) wird dann mittels des PI-Reglers 406 auf Null ausgeregelt.

Der vom Einspritzsytem 416 zusätzlich bereitgestellte Istwert Q_ist 422 wird in ähnlicher Weise, zusammen mit einem aus dem Raildruck p_Rail 400 mittels eines dritten Kennfeldes 424 in einen entsprechenden Sollwert Q_soll 426 umgerechneten Wert, einem Auswerteglied 428 zugeführt. Die beiden Werte Q_ist 422 und Q_soll 426 werden auch hier zu Zwecken der Fehlerdiagnose mittels des Auswerteglieds 428 ausgewertet, wobei die Differenz zwischen diesen beiden Werten gebildet wird. Ein Fehlerfall wird auch in dem vorliegenden Ausführungsbeispiel dann angenommen, wenn die Differenz (U_ist-U_soll) größer als ein empirisch vorab zu ermittelnder Schwellenwert ist. In einem solchen Fall gibt das Auswerteglied 428 dann eine Fehlermeldung 430 an ein hier nicht gezeigtes Motorsteuergerät aus.

Alternativ dazu können Regelung und Diagnose Bestandteil eines Computerprogrammes innerhalb des Steuergerätes sein.

## Patentansprüche

1. Verfahren zur Funktionsdiagnose eines Piezoaktors und/oder einer den Piezoaktor treibenden Leistungsendstufe eines Kraftstoffzumesssystems einer Brennkraftmaschine, wobei der Piezoaktor ladungsbasiert ansteuerbar ist, wobei der Piezoaktor mit einer vorgebbaren elektrischen Ladung aufgeladen wird und die sich bei dieser Ladung ergebende elektrische Spannung mit einer bei dieser Ladung zu erwartenden Sollspannung verglichen wird, und dass aus der Abweichung zwischen den besagten beiden Spannungen auf die Funktionsfähigkeit des Piezoaktors und/oder der Leistungsendstufe geschlossen wird, **dadurch gekennzeichnet, dass** in Abhängigkeit von einer gewünschten Kraftstoffzumessmenge mittels einer Kennlinie eine Sollspannung für einen aktuell anzusteuernden Aktor berechnet wird, dass der berechnete Wert der Sollspannung beim Aufladen des Aktors als Abschaltkriterium zugrunde gelegt wird, dass beim Aufladen der dem Aktor zugeführte elektrische Strom geregelt wird, dass die an dem Aktor anliegende Spannung nach Beendigung des Aufladens, jedoch vor dem Beginn eines nachfolgenden Entladens des Aktors, gemessen wird, und dass die gemessene Spannung verwendet wird, um die Sollspannung für die Ansteuerung des Aktors in Abhängigkeit von der Abweichung der gemessenen Spannung von der Sollspannung auszuregeln.

## Claims

1. Method for the functional diagnosis of a piezoactuator and/or of a power output stage driving the piezoactuator, of a fuel metering system of an internal combustion engine, wherein the piezoactuator can be actuated in a charge-based fashion, wherein the piezoactuator is charged with a predefinable electrical charge and the electrical voltage which occurs with this charge is compared with a target voltage which is to be expected with this charge, and in that the functional capability of the piezoactuator and/or of the power output stage is inferred from the deviation between the two said voltages, **characterized in that** a target voltage for an actuator which is to be currently activated is calculated by means of a characteristic curve as a function of a desired fuel metering quantity, **in that** the calculated value of the target voltage is used as the basis as a switch-off criterion during the charging of the actuator, **in that** the electrical current which is fed to the actuator is regulated during the charging, **in that** the voltage which is applied to the actuator is measured after the ending of the charging, but before the start of subsequent discharging of the actuator, and **in that** the measured voltage is used to adjust the target voltage for the actuation of the actuator as a function of the deviation of the measured voltage from the target voltage.

## Revendications

1. Procédé pour diagnostiquer le fonctionnement d'un actionneur piézoélectrique et/ou d'un étage de sortie de puissance, attaquant l'actionneur piézoélectrique, d'un système de dosage de carburant d'un moteur à combustion interne, dans lequel l'actionneur piézoélectrique peut être commandé sur la base de la charge, dans lequel l'actionneur piézoélectrique est chargé avec une charge électrique pouvant être prédéterminée et la tension électrique délivrée pour cette charge est comparée à une tension nominale attendue pour cette charge, et que l'aptitude au fonctionnement de l'actionneur piézoélectrique et/ou de l'étage de sortie de puissance est déterminée à partir de l'écart entre lesdites deux tensions, **caractérisé en ce qu'**une tension nominale est calculée au moyen d'une courbe caractéristique pour un actionneur devant être effectivement commandé en fonction d'une grandeur d'alimentation en carburant souhaitée, **en ce que** la valeur calculée de la tension nominale est prise comme critère de désactivation lors de la charge de l'actionneur, **en ce que** le courant électrique délivré à l'actionneur est régulé lors de la charge, **en ce que** la tension appliquée à l'actionneur est mesurée après la fin de la charge mais avant le début d'une décharge suivante de l'actionneur, et **en ce que** la tension mesurée est utilisée afin de réguler la tension nominale en fonction de l'écart entre la tension mesurée et la tension nominale pour la commande de l'actionneur.
